# EUROPEAN PATENT SPECIFICATION

(11) **EP 2 816 872 B1**
(45) Date of publication and mention of the grant of the patent: **18.11.2020**
(21) Application number: 13172676.2
(22) Date of filing: 19.06.2013
(51) Int. Cl.: H05B 45/3725, H05B 45/56

(54) **Improved overload protection for a light emitting diode driver**
Verbesserter Überlastschutz für einen lichtemittierenden Diodentreiber
Meilleure protection contre les surcharges pour un circuit de diode électroluminescente

(43) Date of publication of application: 24.12.2014
(73) Proprietor: Helvar Oy Ab, 02150 Espoo (FI)
(72) Inventor: Hämäläinen, Jussi, 03600 Karkkila (FI)
(74) Representative: Berggren Oy, Helsinki & Oulu

(56) References cited:
- US-A1- 2004 179 368
- US-A1- 2007 159 736
- US-A1- 2010 259 956

## Description

### FIELD OF THE INVENTION

The invention relates to control of operation of a driver arranged to drive one or more light emitting diode (LED) light sources. In particular, embodiments of the invention relate to a driver apparatus and a computer program for providing overload protection for a driver arranged to drive one or more LED light sources.

### BACKGROUND

A driver for a LED light source, LED in short, may be provided with overload protection. A straightforward technique for providing the overload protection is to measure current in the driver and to limit the output power of the driver such that the measured current is kept at or below a predefined threshold current. Typically, the threshold current is set slightly above the current corresponding to the nominal maximum load, e.g. to indicate current corresponding to a load that is above the nominal maximum load by a predetermined margin, e.g. 10 % above the nominal maximum load. Such selection of the threshold current serves to avoid unnecessary output power limitation in case the measured current slightly exceeds that corresponding to the nominal maximum load for short periods of time.

The characteristics of a LED may depend on environmental conditions to some extent. In particular, in cold operating conditions the forward voltage of the LED may be significantly higher than in normal operating conditions. In this regard, operating conditions below freezing point, e.g. around - 20 C may be considered as 'cold' operating conditions, whereas conditions approximately at room temperature, e.g. around 20 C, may be considered as 'normal' operating conditions. Consequently, in cold operating conditions a higher current is required to provide the LED with a sufficient power for turning it on. This, in turn, requires higher current in the driver.

However, the threshold current applied in the driver set to allow exceeding the nominal maximum output power by the predefined margin, e.g. 10 %, is typically not sufficient to compensate for the above-mentioned temperature dependency of the LED but the overload protection may limit the output power to a level that is not sufficient to turn the LED on. On the other hand, increasing the margin is typically not a feasible solution, since it would compromise the overload protection functionality.

In related art US 2004/179368 A1 discloses a vehicular lamp used for a vehicle, which includes a semiconductor light emitting element for generating light to be emitted by the vehicular lamp and a current controlling unit for changing a current supplied to the semiconductor light emitting element based on the speed of the vehicle. The current controlling unit may reduce the current, if the speed of the vehicle is lower than a predetermined speed. The current controlling unit may reduce the current, if the vehicle is stopped.

Further in related art, US 2010/259956 A1 discloses a dimmable power supply including an output driver, a variable pulse generator and a load current detector. The output driver has a power input, a control input and a load path. The variable pulse generator includes a control input and a pulse output, with the pulse output connected to the output driver control input. The variable pulse generator is adapted to vary a pulse width at the pulse output based on a signal at the control input. The load current detector has an input connected to the output driver load path and an output connected to the variable pulse generator control input. The load current detector has a time constant adapted to substantially filter out a change in a load current at a frequency of pulses at the variable pulse generator pulse output.

Further in related art, US 2007/159736 A1 discloses a LED-based lamp apparatus that includes a LED unit having multiple LEDs connected in series, a step-up circuit for stepping up a power supply voltage by a switching action of a switching element to supply an electric current to the LED unit, a sensing element for measuring a value of the current, and a controlling element connected in series with the LED unit to control the current based on the measured current value.

### SUMMARY

Consequently, it is an object of the present invention to provide a technique that enables reliable overload protection while enabling turning on the LED also at cold temperatures.

The invention thus relates to a driver apparatus according to independent claim 1 and a computer program according to independent claim 9. Further embodiments of the invention are set out in the dependent claims.

According to a first example embodiment, a driver apparatus for driving one or more light emitting diodes is provided. The apparatus comprises a power converter portion for converting operating power supplied to the driver apparatus into a driving current for light emitting diodes, the power converter portion comprising two or more power converter stages, of which a first power converter stage is configured to derive an intermediate circuit voltage, a control portion for issuing control signals to control the power converter portion, a current monitoring portion for providing a current measurement signal indicative of a current in the first power converter stage of the power converter portion, and a temperature monitoring portion for providing a temperature measurement signal indicative of ambient temperature of the driver apparatus, wherein the control portion is configured to issue, in response to the current measurement signal indicating a current exceeding a threshold value, one or more control signals for limiting the output power of the first power converter stage and to set the threshold value based on the temperature measurement signal. According to a second example embodiment, a computer program for driving one or more light emitting diodes is provided. The computer program comprises one or more sequences of one or more instructions which, when executed by one or more processors, control operation of a driver apparatus comprising a power converter portion for converting operating power supplied to the driver apparatus into a driving current for light emitting diodes, the power converter portion comprising two or more power converter stages, of which a first power converter stage is configured to derive an intermediate circuit voltage, a control portion for issuing control signals to control the power converter portion, a current monitoring portion for providing a current measurement signal indicative of a current in the first power converter stage of the power converter portion, and a temperature monitoring portion for providing a temperature measurement signal indicative of ambient temperature of the driver apparatus, wherein said control of operation of the driver apparatus comprises issuing, in response to the current measurement signal indicating a current exceeding a threshold value, one or more control signals for limiting the output power of the first power converter stage and setting the threshold value based on the temperature measurement signal.

The computer program may be embodied on a volatile or a non-volatile computer-readable record medium, for example as a computer program product comprising at least one computer readable non-transitory medium having program code stored thereon, the program code, which when executed by an apparatus, causes the apparatus at least to perform the operations described hereinbefore for the computer program in accordance with an example embodiment.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

Some embodiments of the invention are illustrated by way of example, and not by way of limitation, in the figures of the accompanying drawings.
Figure 1 schematically illustrates an exemplifying arrangement in accordance with an example embodiment.
Figure 2 schematically illustrates some components of a driver in accordance with an example embodiment.
Figure 3 schematically illustrates some components of a driver employing a half-bridge circuit in accordance with an example embodiment.
Figure 4 schematically illustrates some components of a driver employing a buck converter circuit in accordance with an example embodiment.
Figure 5 schematically illustrates some components of a driver employing a boost converter circuit in accordance with an example embodiment.
Figure 6 schematically illustrates some components of a driver employing a flyback converter circuit in accordance with an example embodiment.
Figure 7 schematically illustrates some components of an apparatus in accordance with an example embodiment.

### DESCRIPTION OF SOME EMBODIMENTS

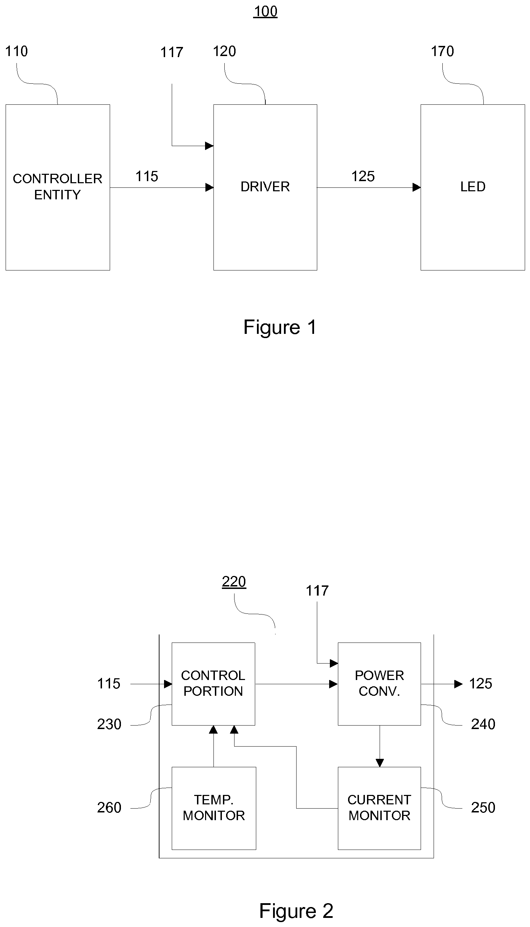

Figure 1 schematically illustrates an exemplifying arrangement 100 for operating one or more LED light sources. The arrangement 100 comprises a controller entity 110 for issuing input control signals 115 for controlling operation of a driver 120. The arrangement 100 further comprises the driver 120 for deriving output current 125 on basis of operating power provided 117 thereto in accordance with the characteristics of the input control signal 115. The arrangement 100 further comprises the LED light source 170.

The controller entity 110 may be provided as a single control entity providing the input control signals 115. Alternatively, although depicted as a single entity in Figure 1, the controller entity 110 may comprise a number of control entities that are configured to operate jointly or independently of each other to provide the input control signals 115. The controller entity 110 may be arranged to issue the input control signals 115 in response to a user input via a user interface and/or in response to a further control signal received at the controller entity 110 from a further entity. The controller entity 110 may, alternatively or additionally, comprise a sensor, such as a PIR sensor or a light sensor, and it may be arranged to issue the control signals 115 in response to sensor measurements in accordance with a predetermined (respective) rule.

The input control signals 115 may be provided in a number of ways and/or in a number of formats. Typically, however, the input control signal 115 is provided as a command or request in accordance with a lighting control protocol. As an example in this regard, the input control signal 115 may be provided as a control signal providing one or more commands according to the Digital Addressable Lighting Interface (DALI) protocol specified in Appendix E.4 of the International Electrotechnical Commission (IEC) standard 60929, in other words as one or more DALI commands. A DALI command provided in an input control signal 115 may e.g. specify a desired or requested light intensity level associated with the output current 125, thereby implying a request for a certain average output current 125.

As a further example, an input control signal 115 may be provided as a control signal comprising one or more commands according to the 1-10 V lighting control signaling, as described/specified in Appendix E.2 of the International Electrotechnical Commission (IEC) standard 60929. In such a signal the voltage of the input control signal 115 may serve as an indication or as a request of the desired light intensity level associated with the output current 125, thereby implying a request for a certain average output current 125.

Instead of providing the input control signal 115 as a command or request in accordance with a lighting control protocol, the input control signal 115 may provide a simple on/off command that enables or disables the operation of the driver 120.

In a variation of the arrangement 100, the control entity 110 may be omitted and the driver 120 may be hence operated without a dedicated control entity and without a dedicated input control signal 115. In such an arrangement the driver 120 may be enabled by supplying the operating power 117 to the driver 120 and disabled by discontinuing the provision of the operating power 117.

Although illustrated as a single entity, the LED light source 170 may comprise a single array of LEDs or, alternatively, two or more arrays of LEDs in parallel. An array of LEDs may be referred to as a LED array. A LED array comprises either a single LED light source or two or more LED light sources connected in series

Figure 2 schematically illustrates some components of a driver 220 for driving the LED light source(s) 170. The driver 220 comprises a control portion 230 for issuing control signals to control provision of driving current provided by a power converter portion 240. The driving current is provided as the output current 125. The driver 220 further comprises a power converter portion 240 for converting the operating power 117 supplied thereto into the driving current The driver 220 further comprises a current monitoring portion 250 for providing a current measurement signal indicative of a current in the driver 220. The driver 200 further comprises a temperature monitoring portion 260 for providing a temperature measurement signal indicative of the temperature of the driver 220 The driver 220 may operate e.g. as the driver 120 of the arrangement 100. The driver 220 is typically provided as a dedicated driver apparatus, embodied by hardware means or as combination of hardware means and software means.

The power converter portion 240 may comprise a single power converter entity, i.e. a single power converter stage. Alternatively, the power converter portion 240 may comprise two or more power converter entities, i.e. two or more power converter stages arranged to operate in cascade. E.g. two power converter stages may be arranged such that the first stage is configured to derive an intermediate circuit voltage on basis of the operating power 117, while the second stage is configured to derive the driving current on basis of the intermediate circuit voltage. In other words, the intermediate circuit voltage serves as the (intermediate) operating power for the second power converter stage. In such an arrangement both stages operate in control of the control portion 230. The control portion 230 may comprise a dedicated control entity for each of the power converter stages to ensure sufficient processing power and processing speed to be available for controlling multiple power converter stages. In other words, the control portion 230 may comprise one or more dedicated control entities, each configured to issue control signals for the corresponding power converter stage of the power converter portion 240. In case there are more than two stages, the first stage derives the first intermediate circuit voltage to be applied as the power supply for the second stage, the second stage derives the second intermediate circuit voltage to be applied as the power supply for the third stage etc., whereas the output of the final power converter stage is the driving current to be provided as the output current 125 of the driver 220.

The control portion 230 is configured to issue the control signals to control provision of the driving current provided by the power converter portion 240 to the output of the driver 220. The power converter portion 240 is configured to convert the operating power 117 supplied thereto into the driving current in accordance with the control signals. In particular, the power converter portion 240 may comprise a switched-mode power converter entity configured to convert the operating power 117 provided as input thereto at a first voltage into the driving current or into operating power for a subsequent power converter stage of the control portion 240. The subsequent power converter stage may be likewise a switched-mode power converter entity. In case the power converter portion 240 comprises two or more power converter stages, the control portion 230 is typically configured to issue dedicated control signals for each of the power converter stages. A number of different switched-mode power converters suitable for operating as a power converter stage of the power converter portion 240 are known in the art. Examples of such switched mode power supplies operating as power converter entities or stages of the power converter portion 240 are provided later in this text.

The control portion 230 may be arranged to operate a switch of a switched-mode power converter entity by alternately closing and opening the switch at a high switching frequency (typically in range of tens of kilohertz) that depends on the load driven by the switched-mode power converter entity. The opening and closing of the switch is controlled on basis of the current measurement signal received at the control portion 230. As an example in this regard, the control portion 230 may be configured to close the switch in response to the current measurement signal indicating current that is lower than or equal to a low threshold value, thereby causing gradual increase in the output current of the switched-mode power converter. The control portion 230 is further configured to open the switch in response to the current measurement signal indicating current that is higher than or equal to a high threshold value, thereby causing gradual decrease in the output current of the switched-mode power converter. Opening the switch may be implemented e.g. by the control portion 230 issuing a control signal for closing the switch, thereby causing an increase in the output power of the power converter entity, while closing the switch may be implemented e.g. by the control portion 230 issuing a control signal for opening the switch, thereby limiting and/or causing a decrease in the output power of the power converter entity. Consequently, the current is caused to alternate between the high and low threshold values. The low threshold value may be, for example, set to zero value or to a value close to zero, whereas the high threshold value is set in accordance with the maximum allowable output current of the switched-mode power converter. As a variation of this example, the low threshold value may be set to predefined percentage of the high threshold value, e.g. to 90 % of the high threshold value. Such control of a switched-mode is known in the art and hence control techniques known in the art may be applied.

Additionally, the control portion 230 may be further configured to issue the control signals in accordance with the command or request received in the input control signal 115, e.g. by issuing a dimming control signal as a suitable signal exhibiting a duty cycle *D*_{ctrl}. The control portion 230 is, preferably, configured to set the duty cycle *D*_{ctrl} in accordance with a command or request received in the input control signal 115. This may comprise the control portion 230 configured to apply a predetermined mapping function to convert the requested light intensity level into the respective desired duty cycle *D*_{req} and to set the duty cycle *D*_{ctrl} of the dimming control signal to *D*_{ctrl} = *D*_{req}. In such an arrangement the applied duty cycle *D*_{ctrl} typically directly indicates the desired light intensity level as a percentage of the maximum light intensity level. Such control of light intensity level in LED drivers is well known in the art.

An example of such a signal is a PWM signal exhibiting the duty cycle *D*_{ctrl} at a suitable cycle frequency *f*_{ctrl}. The cycle frequency *f*_{ctrl} of the dimming control signal is typically significantly lower than the switching frequency applied in control of the switched-mode power converter, e.g. in the range of a few hundred Hertz. Instead of a PWM signal, a signal of other type exhibiting the desired duty cycle *D*_{ctrl} may be employed as the dimming control signal, e.g. a square wave signal that does not exhibit strictly constant cycle duration and therefore may not qualify as a PWM signal according a strict interpretation of the term PWM signal. As another alternative, the dimming control signal may be provided as a PWM-type signal consisting pulses (i.e. active periods exhibiting the 'high' state between non-active periods exhibiting the 'low' state) having shape different from square waves at the duty cycle *D*_{ctrl}.

A power converter entity of the power converter portion 240 is hence configured to provide, when enabled, the driving current having level that varies between the low threshold value and the high threshold value at the switching frequency of the respective switched-mode power converter entity. However, when observed over a number of switching cycles, the driving current exhibits constant or essentially constant predetermined average level or rms level. The dimming control signal that may be issued by the control portion 230 may be arranged to enable and disable the operation of the power converter portion 230 in accordance with active and non-active periods of the dimming control signal, thereby enabling and disabling the supply of the driving current from the power converter portion 240 accordingly to decrease the average driving current in accordance with the duty cycle *D*_{ctrl} of the dimming control signal. Consequently, the output current 125 is either provided as essentially constant current that exhibits small ripple at the switching frequency of the switched-mode power converter entity or the output current 125 exhibits alternating periods of essentially constant current and zero current that follow or at least approximate the duty cycle *D*_{ctrl} and the cycle frequency *f*_{ctrl} of the dimming control signal.

The current monitoring portion 250 is configured to provide the current measurement signal indicative of a current in the driver 220. In this regard, the current monitoring portion 250 may be configured to measure the current of interest in the driver 220 and to provide the current measurement signal to the control portion 230. The current to be measured by the current monitoring portion 250 may be any current in the driver 220 that is considered to be indicative of the characteristics of the power consumed by the driver 220, thereby serving as indication of the loading condition, e.g. overloading, of the driver 220.

Typically, the current to be measured by the current monitoring portion 250 is a current within the power converter portion 240. As further examples, the current to be measured may be a current provided as input to the power converter portion 240 or a current provided as output of the power converter portion 240. The current to be measured depends at least in part on the type and/or characteristics of the power converter portion 240. Examples of current measurement arrangements in context of power converter portions 240 of different characteristics are described hereinafter. In case the power converter portion 240 comprises two or more power converter stages, the current measurement portion 250 is, preferably, arranged to separately monitor current within (or in input to or in output from) each power converter stage to enable the control portion 230 to issue dedicated control signals to each power converter stage. Consequently, the current monitoring portion may be configured to provide a dedicated current measurement signal for each of the power converter stages of the power converter portion 240. However, while the current measurement signal is provided at least with respect to one of the power converter stages of the power converter portion 240, on the other hand some of the power converter stages may be operating using a control that does not rely on current measurement signal(s).

The current monitoring portion 250 may employ any technique known in the art for measuring the current of interest. As an example, the current monitoring portion 250 may comprise a current measuring resistor, e.g. a shunt resistor, through which the current to measured is arranged to flow.

The temperature monitoring portion 260 is configured to provide the temperature measurement signal indicative of the momentary ambient temperature of the driver 220. In this regard, the temperature monitoring portion 260 may be configured to measure the ambient temperature in the driver 220 and provide the temperature measurement signal to the control portion 230.

The temperature monitoring portion 260 may apply any technique known in the art for measuring the ambient temperature. As an example, the temperature measurement portion 260 may comprise a thermistor coupled to an input voltage, e.g. to an input voltage from the mains electricity, to an input voltage derived on basis of the mains voltage or to the operating voltage supplied to the control portion 230. The thermistor may be either a positive temperature coefficient (PTC) thermistor or a negative temperature coefficient (NTC) thermistor. The temperature measurement signal may hence comprise a signal indicative of the voltage across the thermistor or a signal indicative of the voltage change across the thermistor. Consequently, the control unit 230 may be configured to determine the ambient temperature on basis of the indicated voltage drop. Additionally, the control portion 230 may be provided with an indication of a reference voltage, and the control unit 230 may be arranged to determine the ambient temperature on basis of the indicated voltage drop and the indicated reference voltage. The reference voltage may be e.g. said input voltage or a voltage derived on basis of said input voltage.

Alternatively, the temperature monitoring portion 260 may be provided as part of the control portion 230. As an example in this regard, the control portion 230 may be embodied as a processor provided with means for determining the ambient temperature of the processor, the temperature indication provided by the means for determining the ambient temperature hence serving as the temperature measurement signal within the control portion 230.

As described hereinbefore, the control portion 230 is configured to receive the current measurement signal(s) for one or more power converter stages and to issue the control signals for controlling the operation of the respective power converter stage(s) in dependence of the received current measurement signals). In particular, the control portion 230 may be configured to issue, in response to the current measurement signal indicating a measured current *I*_{DRV} in a certain power converter stage exceeding a threshold current value *I*_{TH} (e.g. the high threshold value), one or more control signals for limiting the output power of the respective power converter stage. As described hereinbefore, these control signals may cause opening a switch of the switched-mode power converter entity serving as the respective power converter stage, thereby temporarily limiting the output power of the respective stage and, consequently, limiting the output power of the driver 220. The threshold current value *I*_{TH} is preferably set to a value corresponding to the desired maximum load of the driver 220.

The control portion 230 is configured to receive the temperature measurement signal and to set or adapt the threshold current value *I*_{TH} for said certain power converter stage based at least in part on the temperature measurement signal. Hence, the threshold current value *I*_{TH} for the certain power converter stage is a temperature-adaptive threshold value. The control portion 230 may be arranged to set the threshold current value *I*_{TH} to a high(er) value in response to a low(er) temperature and/or to set the threshold current value *I*_{TH} to a low(er) value in response to a high(er) temperature. The control portion 230 comprise a dedicated control entity for setting and/or adapting the threshold current value *I*_{TH}, possibly provided separately from the dedicated control entity or control entities of the control portion 230 for controlling the respective stage(s) of the power converter portion 240.

Hence, in simplest form the temperature-adaptation of the threshold current value *I*_{TH} involves a low threshold value and a high threshold value, and the control portion 230 is configured to set the threshold current value *I*_{TH} to the high threshold value in response to a temperature that is lower than or equal to a threshold temperature *T*_{TH} and to set the threshold current value *I*_{TH} to the low threshold value in response to a temperature exceeding the threshold temperature *T*_{TH}. The high threshold value may be applicable in 'cold' operating conditions, whereas the low threshold value may be applicable in 'warm' and/or in 'normal' operating conditions.

In a more versatile scenario the control portion 230 is arranged to apply a number of threshold temperatures (or decision levels) dividing a temperature range of interest into sub-ranges, identify the sub-range associated with the indicated temperature and to set the threshold current value *I*_{TH} to a threshold value corresponding to the identified sub-range. The sub-ranges of temperatures and the associated threshold values may be provided for example as a mapping table or other suitable data structure e.g. in a memory accessible by the control portion 230. As a further example, the control portion 230 may be arranged to apply a mapping function that determines the applicable threshold current value *I*_{TH} corresponding to the indicated temperature. Hence, the driver 220 may be configured to increase the threshold current value *I*_{TH} it in response to decreasing temperature and/or to decrease the threshold current value *I*_{TH} in response to increasing temperature.

Instead of actually setting a different threshold current value *I*_{TH} in dependence of the indicated temperature, the control portion 230 may be configured to apply a temperature dependent correction factor c and a fixed predetermined threshold current value *I*_{TH_FIX} to determine the applied threshold current value *I*_{TH} as the product of the correction factor c and the fixed predetermined threshold current value *I*_{TH_FIX} to, i.e. as *I*_{TH} = c ^{∗} *I*_{TH_FIX}. The value of the correction factor c may be determined on basis of the indicated temperature along the lines described above for direct determination of the threshold current value *I*_{TH} on basis of the indicated temperature.

The temperature adaptation of the threshold current value *I*_{TH} serves to enable operation of the driver 220 also in cold temperatures, where the forward voltage of a LED light source 170 is typically increased from the forward voltage the (same) LED light source 170 in normal operating conditions, thereby requiring a higher current in order to turn on the light (than in normal operating conditions). Consequently, increasing the threshold current value *I*_{TH} in cold operating conditions contributes to the driver 220 providing an increased output power in cold operating conditions in comparison to output power that would be provided if using a threshold current value tailored for normal operating conditions. In this regard, operating conditions below freezing point, e.g. around - 20 C may be considered as 'cold' operating conditions, whereas conditions approximately at room temperature, .e.g. around 20 C, may be considered as 'normal' operating conditions.

The control portion 230 may be arranged to set the threshold current value *I*_{TH} to a value that causes the output power to be set to predefined output power. Such predefined output power may be, for example, a predefined limited maximum output power *P*ₗᵢₘ that is considered safe in terms of ensuring that an overload of the driver 220 does not occur.

The temperature adaptation of the threshold current value *I*_{TH} may be implemented as a single step, e.g. by directly replacing the old threshold current value *I*_{TH} with a new one in accordance with the change in ambient temperature. As another example, the temperature adaptation of the threshold current value *I*_{TH} may be implemented as a series of predetermined steps, e.g. by changing the threshold current value *I*_{TH} from the old value towards the new value by predetermined steps until reaching a largest value that is smaller than or equal to the new value to be set in accordance with the change in temperature. The whole series of predetermined steps may be provided within a predetermined period of time or within the steps of the series may be provided at predetermined time intervals between two consecutive steps.

While the control portion 230 is arranged to control operation of one or more power converter stages of the power converter portion 240 on basis of respective current measurement signal(s), the control portion is preferably arranged to apply the temperature adaptation of the threshold current value *I*_{TH} only for a single power converter stage. Advantageously, this single power converter stage is the first power converter stage, since the current within (or in input or in output) of the first power converter stage may be considered to serve as the most direct indication of the power consumed by the power converter portion 240 and hence the power consumed by the driver 220. However, in many power converter portion 240 configurations it is possible to apply the temperature adaptation of the threshold current value *I*_{TH} to power converter stage different from the first stage of the power converter portion 240.

The power converter portion 240 may be provided in various configurations of power converter stages of different characteristics, depending on the intended usage of the driver 220. As an example, the power converter portion 240 may comprise a boost converter as the first power converter stage and a half-bridge circuit as the second power converter stage. In such a configuration the boost converter may operate as the power factor correction (PFC) circuit. Moreover, in such a configuration the power to the boost converter may be supplied via a bridge rectifier and input capacitor(s) to provide constant or relatively constant direct current (DC) for the half-bridge circuit operating as the second power converter stage.

As a variation of the above example, the second power converter stage may be a flyback converter instead of the half-bridge circuit. As another variation, the second power converter stage may be provided as a buck converter. As a further example/variation, the power converter portion 240 may comprise a flyback converter as the first power converter stage and a buck converter as the second power converter stage. However, the power converter portion 240 configurations described herein serve as non-limiting examples only.

According to a further example, regardless of the type and characteristics of the power converter portion 240, the current measurement portion 250 may be configured to measure the driving current to be provided as the output current 125 of the driver 220. As another example, the current measurement portion 250 may be arranged to measure a current within one or more power converter stages of the power converter portion 240. Monitoring a current in a stage of the power converter portion 240, especially in the first stage, may provide a more accurate indication of potential overloading of the driver 220 than the approach of monitoring the driving current. In the following, a few examples of applying the current measurement portion 250 in context of power converter entities of different type are described. In each these examples only a single power converter entity is described for clarity and brevity of description. However, as described hereinbefore, any of the exemplifying power converter entities may serve as a selected power converter stage of the power converter portion 240 comprising one or more power converter stages.

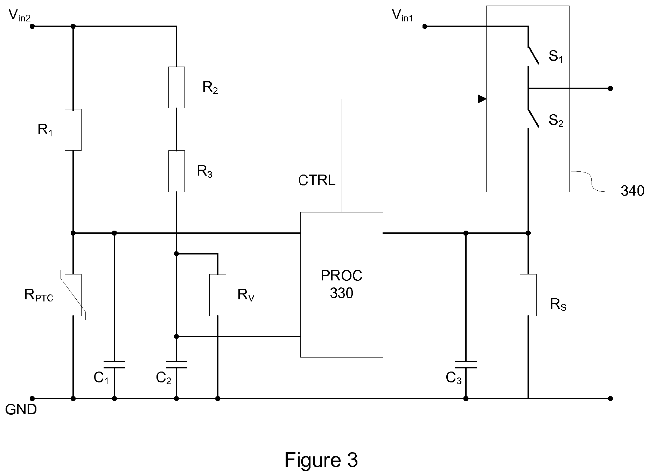

According to an example, a power converter stage of the power converter portion 240 may comprise a half-bridge circuit 340, as schematically illustrated in Figure 3. Half-bridge circuits are well known in the art and hence only some of the components of a half-bridge circuit are illustrated in Figure 3. In particular, Figure 3 only illustrates a high switch S₁ and a low-side switch S₂ of the half-bridge circuit. The operating power 117 is supplied at Vᵢₙ₁, and the half-bridge circuit 340 may be at least in part controlled by the processor 330. As an example, the processor 330 may be configured to issue signal(s) for enabling or disabling operation of the half-bridge circuit 340. As another example, the processor 330 may be configured issue the dimming control signals and/or the control signal described in context of the driver 220 (cf. the control signal CTRL in Figure 3 from the processor 330 to the half-bridge circuit 340) to control operation of the half-bridge circuit 340. The operation of the half-bridge-circuit 340 may be further controlled by another control entity, embodied e.g. as an integrated circuit (IC) or as another processor.

In this example, the current monitoring portion 250 comprises a shunt resistor Rₛ, arranged in the current path flowing through the low side switch S₂ of the half-bridge circuit and hence configured to measure the current through the low-side switch S₂ of the half-bridge circuit. As another example, the current monitoring portion 250 may be arranged to measure the current through the high-side switch S₁ of the half-bridge circuit. Figure 3 depicts the shunt resistor Rₛ of the current measurement portion 250 outside the half-bridge circuit 340 for clarity of illustration. However, an equivalent solution is to arrange the shunt resistor within the half-bridge circuit.

Figure 3 further illustrates the control portion 230 comprising the processor 330. The 'high' side of the shunt resistor Rₛ is coupled to the processor 330, which hence receives the current measurement signal as the voltage on the 'high' side of the shunt resistor Rₛ. The 'low' side of the shunt resistor Rₛ is connected to the ground potential. Consequently, the processor 330 is configured to determine the current through the shunt resistor Rₛ on basis of the signal indicative of the voltage on 'high' side of the shunt resistor Rₛ in comparison to the ground potential.

Figure 3 also illustrates the temperature monitoring portion 260 comprising a PTC thermistor R_{PTC}. The 'high' side of the PTC thermistor R_{PTC} is coupled to the processor 330, which hence receives the temperature measurement signal as the voltage on the 'high' side of the PTC thermistor R_{PTC}. The 'low' side of the PTC thermistor R_{PTC} is connected to the ground potential. The 'high' side of the PTC thermistor R_{PTC} is further coupled to an input voltage Vᵢₙ₂ via resistor R₁, the resistor R₁ and the PTC thermistor R_{PTC} hence constituting a voltage divider.

Figure 3 further illustrates provision of the reference voltage to the processor 330. In this regard, the exemplifying circuit illustrated in Figure 3 comprises a voltage measurement resistor R_{V}. The resistor R_{V} has its 'high' side coupled to the processor 330 to provide the reference voltage to the processor 330. The 'high' side of the resistor R_{V} is further coupled to the input voltage Vᵢₙ₂ via resistors R₂ and R₃. The 'low' side of the resistor R_{V} is connected to the ground potential.

Figure 3 further illustrates capacitors C₁, C₂ and C₃ that may applied for reduction or cancellation of interferences.

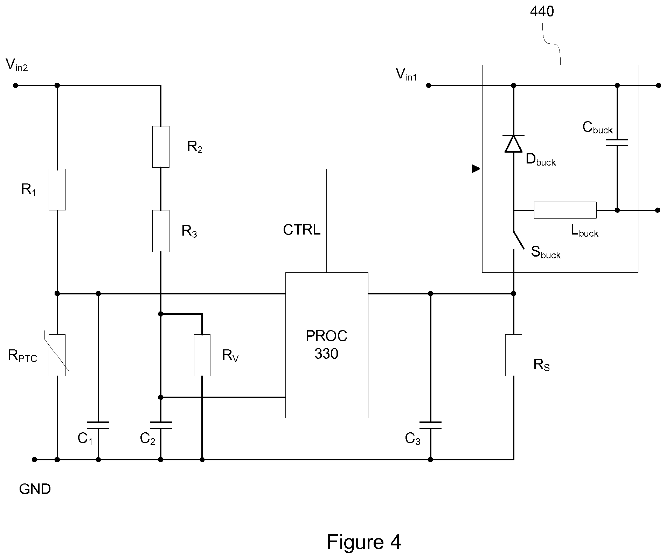

According to another example, a power converter stage of the power converter portion 240 may comprise a buck converter circuit 440, as schematically illustrated in Figure 4. Buck converter circuits are well known in the art and hence only some of the components of the buck converter circuit 440 are illustrated in Figure 4. In particular, a diode D_{buck}, a capacitor C_{buck}, an inductor L_{buck} and a switch S_{buck} are illustrated in Figure 4. The current measurement portion 250, also in this example comprising the shunt resistor Rₛ, is configured to measure the current through the switch S_{buck} of the buck converter. Other components of the circuit of the Figure 4 correspond to those of Figure 3.

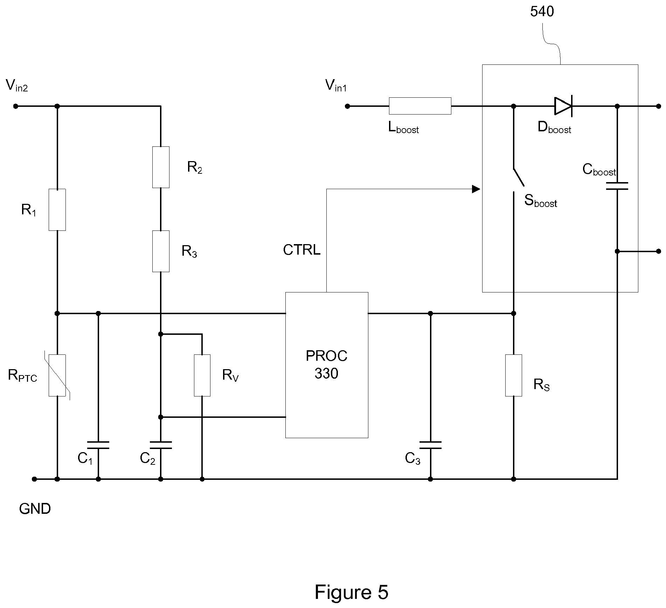

According to a further example, a power converter stage of the power converter portion 240 may comprise a boost converter circuit 540, as schematically illustrated in Figure 5. Boost converter circuits are well known in the art and hence only some of the components of the boost converter circuit 540 are illustrated in Figure 5. The current measurement portion 250, again comprising the shunt resistor Rₛ, is configured to measure the current through the switch S_{boost} of the boost converter.

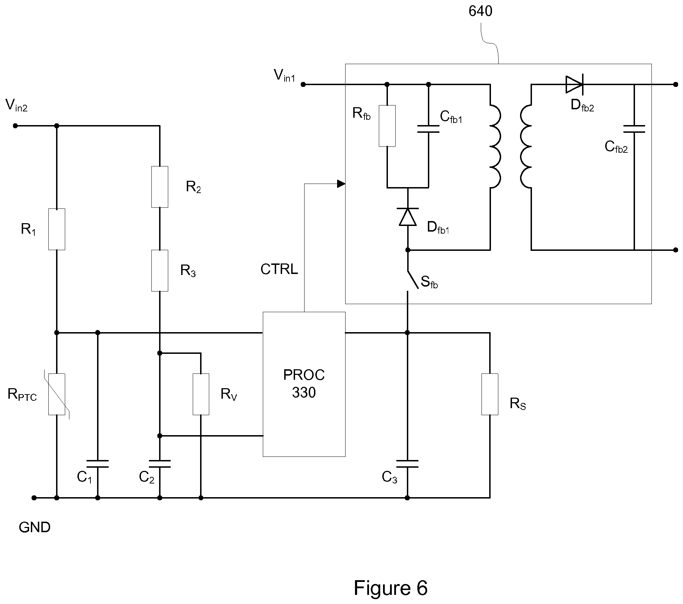

According to a further example, a power converter stage of the power converter portion 240 may comprise a flyback converter circuit 640, as schematically illustrated in Figure 6. Flyback converter circuits are well known in the art and hence only some of the components of the flyback converter circuit 640 are illustrated in Figure 6. In particular, the a diode D_{fb1}, a capacitor C_{fb1}, an inductor L_{fb1}, a resistor R_{fb1} and a switch S_{fb1} in the primary side of the flyback converter circuit 640 and a diode D_{fb2} and a capacitor C_{fb2} of the secondary side of the flyback converter circuit 640 are illustrated in Figure 6. The current measurement portion 250, again comprising the shunt resistor Rₛ, is configured to measure the current through the switch S_{fb2} in the primary side of the flyback converter 640.

The control portion 230 may be provided by hardware means, by software means, or by combination of hardware and software means. As a particular example, the control portion 230 may be provided as an integrated circuit (IC) or as a processor carrying out instructions stored in a memory, which instructions control operation of the control portion 230 as described hereinbefore. In case the control portion comprises multiple control entities, each arranged to control the respective power converter stage, each of the control portion entities may be provided as a dedicated IC or as a dedicated processor. The IC(s) or the processor(s) may be provided with output lines (e.g. output pins) via which e.g. the control signal(s), the current measurement signal and the temperature measurement signal are provided.

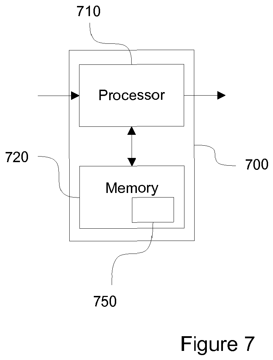

Figure 7 schematically illustrates an exemplifying apparatus 700 that may be employed for embodying at least the control portion 230 of the driver 220. The apparatus 700 comprises a processor 710 and a memory 720, the processor 710 being configured to read from and write to the memory 720. The apparatus 700 may further comprise further structural units or portions. Although the processor 710 is illustrated as a single component, the processor 710 may be implemented as one or more separate components. Although the memory 720 is illustrated as a single component, the memory 720 may be implemented as one or more separate components. Although illustrated as a component separate from the processor 710, the memory 720 may be implemented within the processor 710.

The memory 720 may store a computer program 750 comprising computer-executable instructions that control the operation of the apparatus 700 when loaded into the processor 710 and executed by the processor 710. As an example, the computer program 750 may include one or more sequences of one or more instructions. The computer program 750 may be provided as a computer program code. The processor 710 is able to load and execute the computer program 750 by reading the one or more sequences of one or more instructions included therein from the memory 720. The one or more sequences of one or more instructions may be configured to, when executed by one or more processors, cause the apparatus 700 to implement the operations, procedures and/or functions described hereinbefore in context of the control portion 230.

Hence, the apparatus 700 may comprise at least one processor 710 and at least one memory 720 including computer program code for one or more programs, the at least one memory 720 and the computer program code configured to, with the at least one processor 710, cause the apparatus 700 to perform the operations, procedures and/or functions described hereinbefore in context of the control portion 230.

The apparatus 700 may comprise further components, e.g. the power converter portion 240, the current monitoring portion 250 and the temperature monitoring portion 260 as described hereinbefore in context of the driver 220. The apparatus 700, e.g. the processor 710, may be configured to receive the input control signal 115 as an input, as described in context of the driver 220 and to provide the control signal for controlling the provision of driving current provided by a power converter portion 240 as the output current 125 of the driver 220.

## Claims

1. A driver apparatus (120, 220) for driving one or more light emitting diodes (170), the driver apparatus (120, 220) comprising
a power converter portion (240) for converting operating power (117) supplied to the driver apparatus (120, 220) into a driving current (125) for light emitting diodes (170),
**characterized in that** the power converter portion (240) comprises two or more power converter stages, of which a first power converter stage (340, 440, 540, 640) is configured to derive an intermediate circuit voltage, said driver apparatus (120, 220) further comprising
a control portion (230, 330) for issuing control signals to control the power converter portion (240),
a current monitoring portion (250) arranged to measure a current in the first power converter stage of the power converter portion (240) and to provide a current measurement signal, and
a temperature monitoring portion (260) for providing a temperature measurement signal indicative of ambient temperature of the driver apparatus (120, 220),
wherein the control portion (230, 330) is configured to issue, in response to the current measurement signal indicating a current exceeding a threshold value, one or more control signals for limiting the output power of the first power converter stage (340, 440, 540, 640), and
set the threshold value based on the temperature measurement signal.

2. A driver apparatus (120, 220) according to claim 1, wherein the control portion (230, 330) is configured to set the threshold to a high value in response to a low temperature and to set the threshold to a low value in response to a high temperature.

3. A driver apparatus (120, 220) according to claim 2, wherein the control portion (230, 330) is configured to
increase the threshold value in response to decreasing temperature, and/or
decrease the threshold value in response to increasing temperature.

4. A driver apparatus (120, 220) according to any of claims 1 to 3, wherein setting the threshold value comprises directly replacing the old threshold value with a new threshold value.

5. A driver apparatus (120, 220) according to any of claims 1 to 3, wherein setting the threshold value comprises changing the threshold value in predetermined steps from the old value towards the new value until reaching a largest value that is smaller than or equal to the new value.

6. A driver apparatus according to any of claims 1 to 5,
wherein the first power converter stage comprises a half-bridge circuit (340), and
wherein the current monitoring portion (250) is configured to provide a current measurement signal indicative of a current through a switch (S₂) of the half-bridge circuit (340).

7. A driver apparatus according to any of claims 1 to 5,
wherein the first power converter stage comprises a buck converter circuit (440), and
wherein the current monitoring portion is configured to provide a current measurement signal indicative of a current through the switch (S_{buck}) of the buck converter circuit (440).

8. A driver apparatus according to any of claims 1 to 5,
wherein the first power converter stage comprises a flyback converter circuit (640), and
wherein the current monitoring portion is configured to provide a current measurement signal indicative of a current in the primary side of the flyback converter circuit (640).

9. A computer program for driving one or more light emitting diodes, the computer program including one or more sequences of one or more instructions which, when executed by one or more processors, control operation of a driver apparatus (120, 220) comprising
a power converter portion (240) for converting operating power (117) supplied to the driver apparatus (120, 220) into a driving current (125) for light emitting diodes (170), the power converter portion (240) comprising two or more power converter stages, of which a first power converter stage (340, 440, 540, 640) is configured to derive an intermediate circuit voltage,
a control portion (230, 330) for issuing control signals to control the power converter portion (240),
a current monitoring portion (250) arranged to measure a current in the first power converter stage of the power converter portion (240) and to provide a current measurement signal, and
a temperature monitoring portion (260) for providing a temperature measurement signal indicative of ambient temperature of the driver apparatus (120, 220),
said control of operation of the driver apparatus (120, 220) comprising causing the control portion to issue, in response to the current measurement signal indicating a current exceeding a threshold value, one or more control signals for limiting the output power of the first power converter stage (340, 440, 540, 640), and
to set the threshold value based on the temperature measurement signal.

## Patentansprüche

1. Treibereinrichtung (120, 220) zum Ansteuern einer oder mehrerer Leuchtdioden (170), wobei die Treibereinrichtung (120, 220) Folgendes umfasst:
einen Leistungswandlerteil (240) zum Umwandeln von Betriebsleistung (117), die an die Treibereinrichtung (120, 220) geliefert wird, in einen Ansteuerungsstrom (125) für Leuchtdioden (170),
**dadurch gekennzeichnet, dass** der Leistungswandlerteil (240) zwei oder mehr Leistungswandlerstufen umfasst, von denen eine erste Leistungswandlerstufe (340, 440, 540, 640) zum Ableiten einer Zwischenschaltkreisspannung ausgebildet ist, wobei die Treibereinrichtung (120, 220) ferner Folgendes umfasst:
einen Steuerteil (230, 330) zum Ausgeben von Steuersignalen zum Steuern des Leistungswandlerteils (240) ,
einen Stromüberwachungsteil (250), der zum Messen eines Stroms in der ersten Leistungswandlerstufe des Leistungswandlerteils (240) und zum Bereitstellen eines Strommesssignals eingerichtet ist, und
einen Temperaturüberwachungsteil (260) zum Bereitstellen eines Temperaturmesssignals, das eine Umgebungstemperatur der Treibereinrichtung (120, 220) angibt,
wobei der Steuerteil (230, 330) zum Ausgeben, als Reaktion darauf, dass das Strommesssignal angibt, dass ein Strom einen Schwellenwert überschreitet, eines oder mehrerer Steuersignale zum Beschränken der Ausgabeleistung der ersten Leistungswandlerstufe (340, 440, 540, 640) und zum Festlegen des Schwellenwertes basierend auf dem Temperaturmesssignal ausgebildet ist.

2. Treibereinrichtung (120, 220) nach Anspruch 1, wobei der Steuerteil (230, 330) zum Festlegen der Schwelle auf einen hohen Wert als Reaktion auf eine niedrige Temperatur und zum Festlegen der Schwelle auf einen niedrigen Wert als Reaktion auf eine hohe Temperatur ausgebildet ist.

3. Treibereinrichtung (120, 220) nach Anspruch 2, wobei der Steuerteil (230, 330) zu Folgendem ausgebildet ist:
Erhöhen des Schwellenwertes als Reaktion auf eine Abnahme der Temperatur, und/oder
Verringern des Schwellenwertes als Reaktion auf eine Zunahme der Temperatur.

4. Treibereinrichtung (120, 220) nach einem der Ansprüche 1 bis 3, wobei das Festlegen des Schwellenwertes direktes Ersetzen des alten Schwellenwertes mit einem neuen Schwellenwert umfasst.

5. Treibereinrichtung (120, 220) nach einem der Ansprüche 1 bis 3, wobei das Festlegen des Schwellenwertes Ändern des Schwellenwertes in vorbestimmten Schritten von dem alten Wert zu dem neuen Wert hin umfasst, bis ein größter Wert erreicht wird, der kleiner als oder gleich dem neuen Wert ist.

6. Treibereinrichtung nach einem der Ansprüche 1 bis 5,
wobei die erste Leistungswandlerstufe einen Halbbrückenschaltkreis (340) umfasst, und
wobei der Stromüberwachungsteil (250) zum Bereitstellen eines Strommesssignals ausgebildet ist, das einen Strom durch einen Schalter (S₂) des Halbbrückenschaltkreises (340) angibt.

7. Treibereinrichtung nach einem der Ansprüche 1 bis 5,
wobei die erste Leistungswandlerstufe einen Abwärtswandlerschaltkreis (440) umfasst, und
wobei der Stromüberwachungsteil zum Bereitstellen eines Strommesssignals ausgebildet ist, das einen Strom durch den Schalter (S_{buck}) des Abwärtswandlerschaltkreises (440) angibt.

8. Treibereinrichtung nach einem der Ansprüche 1 bis 5,
wobei die erste Leistungswandlerstufe einen Sperrwandlerschaltkreis (640) umfasst, und
wobei der Stromüberwachungsteil zum Bereitstellen eines Strommesssignals ausgebildet ist, das einen Strom in der Primärseite des Sperrwandlerschaltkreises (640) angibt.

9. Computerprogramm zum Ansteuern einer oder mehrerer Leuchtdioden, wobei das Computerprogramm eine oder mehrere Sequenzen aus einer oder mehreren Anweisungen beinhaltet, die bei Ausführung durch einen oder mehrere Prozessoren einen Betrieb einer Treibereinrichtung (120, 220) steuern, die Folgendes umfasst:
einen Leistungswandlerteil (240) zum Umwandeln von Betriebsleistung (117), die an die Treibereinrichtung (120, 220) geliefert wird, in einen Ansteuerungsstrom (125) für Leuchtdioden (170), wobei der Leistungswandlerteil (240) zwei oder mehr Leistungswandlerstufen umfasst, von denen eine erste Leistungswandlerstufe (340, 440, 540, 640) zum Ableiten einer Zwischenschaltkreisspannung ausgebildet ist,
einen Steuerteil (230, 330) zum Ausgeben von Steuersignalen zum Steuern des Leistungswandlerteils (240) ,
einen Stromüberwachungsteil (250), der zum Messen eines Stroms in der ersten Leistungswandlerstufe des Leistungswandlerteils (240) und zum Bereitstellen eines Strommesssignals eingerichtet ist, und
einen Temperaturüberwachungsteil (260) zum Bereitstellen eines Temperaturmesssignals, das eine Umgebungstemperatur der Treibereinrichtung (120, 220) angibt,
wobei das Steuern des Betriebs der Treibereinrichtung (120, 220) Folgendes umfasst:
Veranlassen, dass der Steuerteil, als Reaktion darauf, dass das Strommesssignal angibt, dass ein Strom einen Schwellenwert überschreitet, ein oder mehrere Steuersignale zum Beschränken der Ausgabeleistung der ersten Leistungswandlerstufe (340, 440, 540, 640) ausgibt und
den Schwellenwert basierend auf dem Temperaturmesssignal festlegt.

## Revendications

1. Appareil d'excitation (120, 220) pour exciter une ou plusieurs diodes électroluminescentes (170), l'appareil d'excitation (120, 220) comprenant
une partie de conversion de puissance (240) pour convertir une puissance de fonctionnement (117) fournie à l'appareil d'excitation (120, 220) en un courant d'excitation (125) de diodes électroluminescentes (170),
**caractérisé en ce que** la partie de conversion de puissance (240) comprend deux ou plusieurs étages de conversion de puissance, un premier étage de conversion de puissance (340, 440, 540, 640) étant configuré pour dériver une tension de circuit intermédiaire, ledit appareil d'excitation (120, 220) comprenant en outre
une partie de commande (230, 330) pour délivrer des signaux de commande afin de commander la partie de conversion de puissance (240),
un partie de surveillance de courant (250) agencée pour mesurer un courant dans le premier étage de conversion de puissance de la partie de conversion de puissance (240) et fournir un signal de mesure de courant, et
une partie de surveillance de température (260) pour fournir un signal de mesure de température indiquant la température ambiante de l'appareil d'excitation (120, 220),
dans lequel la partie de commande (230, 330) est configurée pour
délivrer, quand le signal de mesure de courant indique un courant dépassant une valeur seuil, un ou plusieurs signaux de commande pour limiter la puissance de sortie du premier étage de conversion de puissance (340, 440, 540, 640), et
régler la valeur seuil sur la base du signal de mesure de température.

2. Appareil d'excitation (120, 220) selon la revendication 1, dans lequel la partie de commande (230, 330) est configurée pour régler le seuil à une valeur élevée en réponse à une basse température et régler le seuil à une valeur basse en réponse à une température élevée.

3. Appareil d'excitation (120, 220) selon la revendication 2, dans lequel la partie de commande (230, 330) est configurée pour
augmenter la valeur seuil en réponse à une température décroissante, et/ou
diminuer la valeur seuil en réponse à une température croissante.

4. Appareil d'excitation (120, 220) selon l'une quelconque des revendications 1 à 3, dans lequel le réglage de la valeur seuil comprend le remplacement direct de l'ancienne valeur seuil par une nouvelle valeur seuil.

5. Appareil d'excitation (120, 220) selon l'une quelconque des revendications 1 à 3, dans lequel le réglage de la valeur seuil comprend le changement de la valeur seuil par pas prédéterminés de l'ancienne valeur vers la nouvelle valeur jusqu'à atteindre une plus grande valeur qui est inférieure ou égale à la nouvelle valeur.

6. Appareil d'excitation selon l'une quelconque des revendications 1 à 5,
dans lequel le premier étage de conversion de puissance comprend un circuit demi-pont (340), et
dans lequel la partie de surveillance de courant (250) est configurée pour fournir un signal de mesure de courant indiquant un courant à travers un commutateur (S₂) du circuit demi-pont (340).

7. Appareil d'excitation selon l'une quelconque des revendications 1 à 5,
dans lequel le premier étage de conversion de puissance comprend un circuit convertisseur Buck (440), et
dans lequel la partie de surveillance de courant est configurée pour fournir un signal de mesure de courant indiquant un courant à travers le commutateur (S_{buck}) du circuit convertisseur Buck (440).

8. Appareil d'excitation selon l'une quelconque des revendications 1 à 5,
dans lequel le premier étage de conversion de puissance comprend un circuit convertisseur Flyback (640), et
dans lequel la partie de surveillance de courant est configurée pour fournir un signal de mesure de courant indiquant un courant dans le côté primaire du circuit convertisseur Flyback (640).

9. Programme informatique pour exciter une ou plusieurs diodes électroluminescentes, le programme informatique comportant une ou plusieurs séquences d'une ou plusieurs instructions qui, à leur exécution par un ou plusieurs processeurs, commandent le fonctionnement de l'appareil d'excitation (120, 220) comprenant
une partie de conversion de puissance (240) pour convertir une puissance de fonctionnement (117) fournie à l'appareil d'excitation (120, 220) en un courant d'excitation (125) de diodes électroluminescentes (170), la partie de conversion de puissance (240) comprenant deux ou plusieurs étages de conversion de puissance, un premier étage de conversion de puissance (340, 440, 540, 640) étant configuré pour dériver une tension de circuit intermédiaire,
une partie de commande (230, 330) pour délivrer des signaux de commande afin de commander la partie de conversion de puissance (240),
une partie de surveillance de courant (250) agencée pour mesurer un courant dans le premier étage de conversion de puissance de la partie de conversion de puissance (240) et fournir un signal de mesure de courant, et
une partie de surveillance de température (260) pour fournir un signal de mesure de température indiquant la température ambiante de l'appareil d'excitation (120, 220),
ladite commande du fonctionnement de l'appareil d'excitation (120, 220) comprenant
la mise en situation de la commande pour délivrer, quand le signal de mesure de courant dépasse une valeur seuil, un ou plusieurs signaux de commande pour limiter la puissance de sortie du premier étage de conversion de puissance (340, 440, 540, 640), et régler la valeur seuil en fonction du signal de mesure de température.
